# FASCICULE DE BREVET EUROPEEN

(11) **EP 3 980 207 B1**
(45) Date de publication et mention de la délivrance du brevet: **26.07.2023**
(21) Numéro de dépôt: 20742800.4
(22) Date de dépôt: 07.06.2020
(51) Int. Cl.: B22F 3/10, B22F 3/22, B22F 5/00, B22F 5/04, B22F 7/06, F01D 5/00, F01D 9/04

(54) **PROCEDE DE FABRICATION DE PIECE DE TURBOMACHINE PAR MOULAGE MIM**
VERFAHREN ZUR HERSTELLUNG EINES TURBOMASCHINENTEILS DURCH MIM-FORMEN
METHOD FOR MANUFACTURING A TURBOMACHINE PART BY MIM MOLDING

(30) Priorité: 07.06.2019 FR 1906075
(43) Date de publication de la demande: 13.04.2022
(73) Titulaire: SAFRAN AIRCRAFT ENGINES, 75015 Paris (FR)
(72) Inventeur: SISTACH, Hugo, 77550 MOISSY-CRAMAYEL (FR); COLAS, Cédric, Pierre, Jacques, 77550 MOISSY-CRAMAYEL (FR); GRALL, Terence, 77550 MOISSY-CRAMAYEL (FR)
(74) Mandataire: Ernest Gutmann - Yves Plasseraud S.A.S.
(86) Numéro de dépôt international: PCT/FR2020/050966
(87) Numéro de publication internationale: WO 2020/245551

(56) Documents cités:
- EP-A1- 2 233 232
- WO-A1-2010/121966
- DE-A1-102011 082 484
- US-A1- 2008 199 343
- US-A1- 2016 221 081

## Description

L'invention concerne un procédé de fabrication d'une pièce d'aéronef ou de turbomachine pour aéronef, via un moulage par injection.

Le PIM correspond à un tel moulage. Il s'agit d'un moulage par injection de poudre (Powder Injection Molding), comme par exemple cela est divulgué dans WO2017006053 qui peut s'appliquer au cas d'espèce. D'autres détails sont fournis sur le site : https://www.ecam.fr/materiaux-structures/ressources-scientifiques-techniques/le-pim/generalites-procede-pim/.

Comme dans le cas présent, on a affaire à un procédé qui utilise du liant plastique et de la poudre mélangés dans un feedstock (ou matériau de base). Ce matériau mélangé est ensuite injecté pour mettre la pièce en forme. Puis, on déliante la pièce (on enlève le liant plastique), on la frite et on obtient une pièce telle que souhaitée.

Ce procédé est performant pour des pièces injectables (que l'on peut réaliser d'une seule traite dans un moule, puis sortir du moule). Certaines pièces, notamment des redresseurs de compresseur ou des distributeurs de turbine de turbomachines pour aéronef sont des pièces complexes à injecter et à sortir du moule. Pour ce faire, elles nécessiteraient un moule complexe avec de nombreux tiroirs, voire elles ne seraient pas moulables directement.

Par contre, d'autres zones de telles pièces, telles des pales de distributeurs ou de redresseurs précités, et d'autres aubes, sont des pièces adaptées pour le MIM et qui s'injectent bien.

Ce qui précède s'applique en particulier aux pièces métalliques obtenues par la technique MIM (Moulage par Injection Métallique ou Metal Injection Molding) où la poudre est alors métallique : Le MIM consiste donc à réaliser des composants métalliques plus ou moins complexes par injection d'un mélange de poudre métallique et d'une résine polymère (ci-avant le « liant plastique », qui peut être thermoplastique), communément dénommée « Feedstock ». Ce mélange est réduit sous forme de granulés puis injecté.

Une problématique ici posée est donc liée à la fabrication en PIM, et en particulier et notamment en MIM, de pièces mal injectables.

Une autre problématique est liée à une fabrication qui doit être précise, rapide, et qui doit conduire à des pièces posant de bonnes caractéristiques mécaniques et de tenue en température, compte tenu que les pièces à fabriquer peuvent être des pièces structurelles telles donc que des (secteurs de) redresseurs de compresseur ou des (secteurs de) distributeurs de turbine.

Une solution proposée est de réaliser un assemblage au vert d'éléments de pièces par fusion locale de liant à leur interface.

Par exemple pour un secteur de distributeur de turbine, une solution proposée est d'injecter les pièces vertes à assembler, telles d'un côté les aubes, de l'autre les secteurs de couronne (ou bride) extérieure et de couronne (ou bride) intérieure, chacune donc en secteurs d'anneau, puis, après chauffage(s), d'assembler entre elles des zones d'interface entre les pales et les brides respectives, toujours à l'état vert.

Une fois le liant à l'interface refroidi, on obtient un secteur de distributeur à l'état vert complet. Celui-ci peut alors suivre la gamme PIM/MIM standard (déliantage et frittage sur un support adapté) afin d'obtenir la pièce métallique telle que voulue.

De fait, dans US2016221081A1 il a déjà été proposé un procédé de fabrication d'une pièce d'aéronef ou de turbomachine pour aéronef, via un moulage par injection d'au moins un premier et un second éléments verts constitutifs de ladite pièce, ladite pièce à fabriquer étant un secteur de redresseur de compresseur de turbomachine ou un secteur de distributeur de turbine de turbomachine, dans lequel procédé:
a) on prépare, pour chaque premier et second éléments, un mélange de poudre et d'un liant polymère liquide ou à l'état fondu, adapté pour permettre de lier les grains de poudre ensemble,
b) on injecte les mélanges préparés dans des moules adaptés respectivement à la forme du premier et du second élément, de façon à obtenir deux ébauches vertes, respectivement des premier et second éléments,
c) une fois le liant devenu consistant, on extrait les deux ébauches vertes des moules respectifs,
d) au moins une zone d'assemblage de l'une au moins des deux ébauches vertes, devant être située à l'interface entre lesdites deux ébauches vertes à assembler entre elles, est chauffée, de façon que du liant fondu soit présent à l'endroit de ladite zone d'assemblage,
e) on assemble entre elles les deux ébauches vertes par ladite au moins une zone d'assemblage, de façon à obtenir une ébauche verte globale de ladite pièce
f) on élimine une partie au moins du liant de l'ébauche verte globale, de façon à obtenir une ébauche verte globale déliantée, et
g) on réalise sur l'ébauche verte globale déliantée un traitement de frittage.

De ce qui précède, on aura compris que l'on peut fabriquer des pièces complexes, non injectables selon les techniques antérieurement fréquentes, en recourant à la technique PIM pour ses performances.

En effet, le moulage par injection de poudre, PIM (powder injection molding en anglais) est typiquement un moulage par injection de pièces à partir de mélange de poudre métallique ou céramique et de liant polymère, suivi par un déliantage (élimination du liant) de la pièce dans un four sous atmosphère contrôlée, puis par la consolidation de celle-ci par frittage, a priori dans un autre four. Si le matériau utilisé est du métal on parle en anglais de metal injection molding (MIM ; moulage par injection de métal). Cette technique a l'avantage de pouvoir créer des formes complexes avec un excellent état de surface et des tolérances fines. Plus rentables pour des formes complexes, le moulage par injection de poudre permet la réalisation en moyennes et grandes séries de pièces performantes : Grâce à cette technique et à la technologie de poudres, il est possible de créer des alliages extrêmement homogènes, qui ont une très bonne résistance à la corrosion, entre autres qualités. Toutefois, dans US2016221081A1, les deux ébauches vertes sont des secteurs comprenant chacun une aube et un secteur de la couronne extérieure et de la couronne intérieure. L'invention propose un procédé alternatif à cela.

Certes, dans WO2010121966A1 est divulgué un procédé dans lequel des couronnes sont déliantées en contact avec des aubes.

Toutefois, les aubes sont introduites dans des logements ménagés dans les couronnes, et les aubes sont préfabriquées et finies. Elles ne contiennent plus aucun liant.

Ceci n'est pas avantageux.

En conséquence, compte tenu de ce qui précède, un aspect de l'invention, lié au cas spécifique de la fabrication d'un secteur de redresseur de compresseur de turbomachine ou d'un secteur de distributeur de turbine de turbomachine en tant que dite pièce à fabriquer, conseille que lesdites deux ébauches vertes, respectivement des premier et second éléments, soient des ébauches vertes respectivement :
- d'au moins une partie d'aube de redressement dudit secteur de redresseur ou secteur de distributeur, et
- d'un secteur d'une couronne extérieure ou d'un secteur d'une couronne intérieure dudit secteur de redresseur ou secteur de distributeur, avec lequel une extrémité de ladite au moins une partie d'aube de redressement est à assembler à l'étape e).

Un problème corolaire à l'étape d) de préparation de l'assemblage peut en outre exister, lié au contexte du chauffage, délicat à conduire.

Aussi est-il proposé que, lors de l'étape d), ladite zone d'assemblage de l'une au moins des ébauches vertes à assembler entre elles puyisse être chauffée :
- par apport d'une quantité additionnelle de liant à l'endroit de cette zone d'assemblage, et/ou
- par apport d'énergie calorifique à l'une au moins des deux ébauches vertes, à l'endroit de ladite zone d'assemblage, jusqu'à ce que dudit liant fondu y soit présent.

On pourra ainsi tenir compte de l'accessibilité aux zones en cause, des formes à réaliser, des épaisseurs en cause, notamment.

Dans le cas d'un apport d'une quantité additionnelle de liant, cette intervention et l'assemblage de l'étape e) pourront favorablement comprendre :
- avant d'apporter ladite quantité additionnelle de liant, de faire fondre la quantité additionnelle de liant,
- une application de ladite quantité additionnelle de liant fondu à l'endroit de ladite zone d'assemblage, puis
- l'assemblage de l'étape e).

Ainsi, on gérera au moins en partie les conditions de quantité additionnelle et de chauffage du liant en amont et à distance de la zone d'assemblage.

Par ailleurs, et là encore de préférence, une telle application de quantité additionnelle de liant fondu à l'endroit de ladite zone d'assemblage comprendra une application de ladite quantité additionnelle de liant fondu à l'endroit de ladite zone d'assemblage, sur les deux ébauches vertes.

De la sorte, on disposera de deux masses fondues, en quantités partagées et avec des gradients thermiques a priori mieux maîtrisés sur les deux pièces.

A noter aussi qu'une étape d) de préparation de l'assemblage bien conduite facilitera et sécurisera au moins l'étape e) suivante d'assemblage, que l'on pourra ainsi et d'autant plus facilement réaliser :
- avec une application des deux ébauches vertes l'une contre l'autre à l'endroit de ladite zone d'assemblage, puis,
- avec une pression des deux ébauches vertes l'une vers l'autre.

Le mieux l'étape d) de préparation de l'assemblage aura été conduite, le mieux on maîtrisera les conditions d'application des ébauches l'une contre l'autre et la(les) pression(s) à exercer. A ce sujet, il est aussi proposé, favorablement :
- que lors de l'étape d), au moins ladite zone d'assemblage de l'une au moins des deux ébauches vertes à assembler entre elles puisse être chauffée jusqu'à ce que du liant fondu entre 75°C et 85°C à +/- 5°C soit présent, et/ou,
- que ladite au moins une zone d'assemblage de l'une au moins des deux ébauches vertes à assembler entre elles soit chauffée entre 2s et 15s.

La mise en oeuvre de toute ou partie des précautions d'intervention ci-avant doit permettre qu'à l'endroit de ladite zone d'assemblage de l'une au moins des deux ébauches vertes, ladite ou chaque ébauche verte puisse présenter une surépaisseur de matière (favorable à un assemblage fort et à une bonne diffusion thermique et une imbrication solide entre les matériaux) qui disparaîtra toutefois au moins en partie à l'endroit de ladite interface, à l'issue de l'étape e).

La surépaisseur (L ci-après) de matière s'étendra de préférence dans la direction où la pression d'assemblage est exercée, permettant ainsi de favoriser la tenue mécanique.

La définition des paramètres de chauffe du liant plastique à appliquer et/ou de la zone d'interface au vert entre les éléments doit permettre d'obtenir un liant suffisamment pâteux, pour que les interfaces se lient bien, mais assez solide pour que la géométrie se maintienne.

Notamment sur les secteurs de redresseur ou de distributeur, une dite surépaisseur de matière, potentiellement nécessaire lors de l'assemblage, de préférence comprise entre 0.5mm et 2mm à l'interface, voire une pression appliquée entre les ébauches, l'une vers l'autre, entre 6 et 15 MPa doit favoriser un dimensionnel de pièce finale bien respecté et que la pièce ne soit pas écrasée.

La précision de l'assemblage est en effet importante et doit intervenir sur le dimensionnel final.

### Brève description des figures

[Fig. 1] représente un schéma d'éléments utiles dans cet exemple pour réaliser une pièce conforme à l'invention, dans un état initial,
[Fig. 2] représente un schéma des éléments de la [Fig. 1], dans un état suivant de réalisation de la pièce, conformément à l'invention,
[Fig. 3] représente un schéma des éléments de la [Fig. 2], dans un état suivant de réalisation de la pièce, conformément à l'invention,
[Fig. 4] représente un schéma des éléments de la [Fig. 3], dans un état suivant de réalisation de la pièce, conformément à l'invention,
[Fig. 5] représente un schéma des éléments de la [Fig. 4], dans un état suivant de réalisation de la pièce, conformément à l'invention,
[Fig. 6] représente un schéma en perspective d'un exemple de secteur de redresseur ou de distributeur de turbomachine pour aéronef pouvant être fabriqué selon l'invention.

### Description détaillée de l'invention

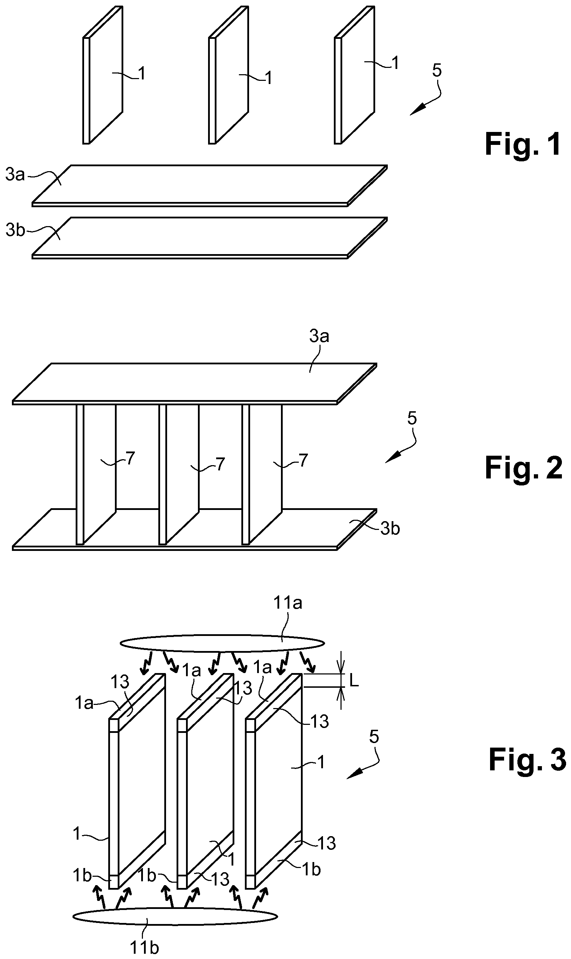

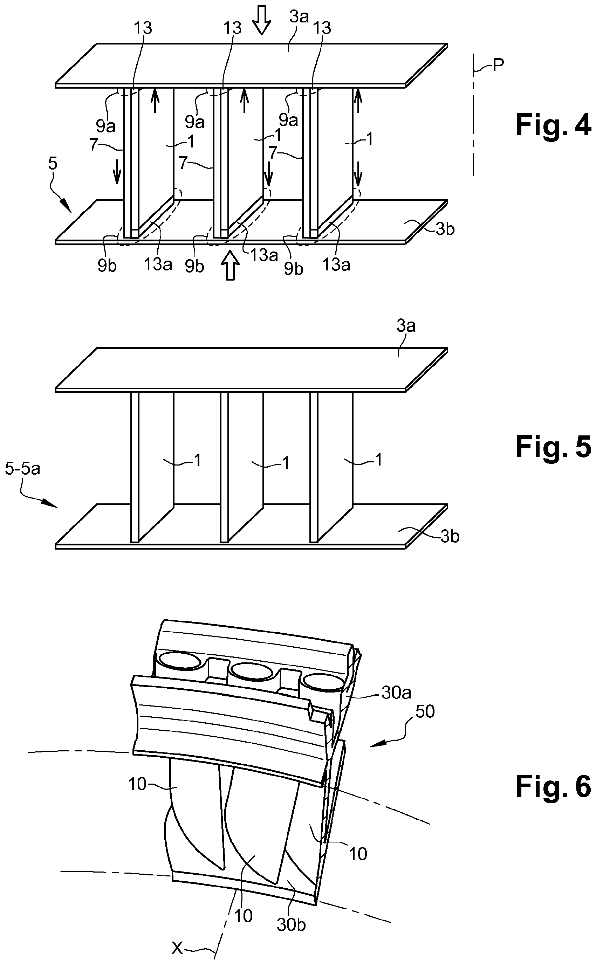

Il s'agit donc ici de fabriquer une pièce d'aéronef ou de turbomachine pour aéronef, telle celle repérée 50 figure 6, par un moulage par injection (PIM, tel notamment que MIM) d'au moins un premier et un second éléments verts, tels les éléments 1 et 3a ou 1 et 3b figure 1, constitutifs de ladite pièce.

Entre les figures 1-5 et la figure 6, lesdits éléments et les pièces se correspondent : figure 6, un zéro leur a été adjoint à droite ; ainsi à la pièce 5 des figures 1-5 correspond la pièce 50 de la figure 6 ; idem pour lesdits éléments 1 ,3a,3b des figures 1-5 et ceux respectivement 10,30a,30b de la pièce 50 de la figure 6.

Comme schématisé figure 6, les éléments et la pièce symboliques 1,3a,3b et 5 des figures 1-5 correspondent donc respectivement à des parties 10,30a,30b d'un secteur 50 de redresseur de compresseur de turbomachine aéronautique ou un secteur de distributeur de turbine d'une telle turbomachine.

Dans des turbomachines aéronautiques, les modules de compresseur et de turbine comprennent des roues mobiles alternant avec des redresseurs, dans le cas de compresseurs, ou avec des distributeurs, dans le cas de turbines. Un redresseur de compresseur couramment utilisé comprend une pluralité d'aubes de redressement fixées par exemple par soudage, à une couronne extérieure qui a une fonction structurale et qui délimite la veine d'écoulement d'air du côté extérieur. Du côté intérieur, la veine d'écoulement d'air est délimitée par une virole intérieure non structurale. La couronne extérieure, les aubes et la couronne intérieure sont typiquement en métal. Un distributeur de turbine traditionnel est couramment formé de plusieurs secteurs en métal obtenus en une seule pièce par fonderie et comprenant chacun un secteur de virole extérieure définissant la veine d'écoulement des gaz du côté extérieur, un secteur de virole intérieure définissant la veine d'écoulement des gaz du côté intérieur et des aubes reliant les secteurs de virole extérieure et intérieure.

On notera que les expressions « intérieur(e) » et « extérieur(e) » sont à considérer radialement par rapport à l'axe X (voir figure 6) longitudinal de la turbomachine autour duquel tourne la partie rotor, et en particulier les roues mobiles précitées.

Ainsi, figure 6, on a schématisé un secteur 50 de redresseur ou de distributeur.

Le secteur 50 comprend un segment 3a de couronne ou bride extérieure, définissant localement une plate-forme extérieure et un segment 3b de couronne ou bride intérieure, définissant localement une plate-forme intérieure, entre lesquels s'étendent des aubes 10 destinées à orienter le flux d'air dans une direction favorable à l'entraînement par exemple d'une roue mobile axialement adjacente (non représentée). Les aubes 10 sont sensiblement radiales à l'axe X.

Circonférentiellement, autour donc de l'axe X, on assemble plusieurs tels secteurs 50 entre eux pour former un distributeur ; voir pointillés figure 6.

Une fois assemblés, les segments 3a forment notamment la plate-forme extérieure annulaire du redresseur ou du distributeur, et les segments 3b en forment notamment la plate-forme intérieure annulaire.

L'invention permet de fabriquer de tels secteurs dont les formes sont complexes.

La procédure proposée est la suivante, que l'on présente en référence aux schémas génériques des figures 1-5, dans le cas d'un moulage de type MIM :
a) on prépare d'abord, pour fabriquer chaque premier et second éléments 3a,3b, un mélange de poudre métallique et d'un liant polymère liquide ou à l'état fondu, adapté pour permettre de lier les grains de poudre ensemble.

On entend donc ici par liant un constituant ou un ensemble de constituants permettant de lier les grains de poudres métalliques les uns aux autres pour former un mélange d'apparence homogène.

Le liant peut comprendre des additifs destinés, par exemple, à faciliter la dispersion, la mise en suspension des poudres métalliques ou à améliorer d'autres caractéristiques du mélange.

Le qualificatif "liquide" pour le liant comprend l'état fondu et correspond à des consistances diverses pouvant être caractérisées par leur viscosité.

Le liant est choisi pour pouvoir prendre consistance lorsqu'on le souhaite. On entend par là prendre un état capable de retenir une forme contrairement par exemple à l'état liquide.

On pourra avoir ainsi typiquement préparé (à titre d'exemple non limitatif) un mélange homogène d'un liant liquide ou à l'état fondu, et d'un superalliage à base de Ni, de Co ou de Fe. Une composition d'injection comme dans FR3028784 pourrait aussi être utilisée.

Une fois l'étape a) réalisée et donc mélange de poudre et de liant obtenu, on va :
b) injecter les mélanges préparés dans des moules adaptés respectivement à la forme du premier élément, tel un élément 1, et du second élément, tel un élément 3a ou 3b, de façon à obtenir deux ébauches vertes, respectivement des premier et second éléments.

Une telle technique de fabrication de type PIM (MIM si la poudre est métallique) est bien connue et maîtrisée.
c) une fois le liant devenu consistant, on extrait les deux ébauches vertes des moules respectifs.

Si besoin est, il est précisé qu'une pièce (ou un élément ) vert(e) est son état injecté, extrait du moule, à la différence d'une pièce (ou d'un élément ) brun(e), une fois délianté(e) ; voir étape **f**).

On va alors pouvoir si nécessaire pré-positionner au moins certains des éléments moulés. C'est ce que schématise la figure 2 : un outillage à supports 7 a été interposé entre les éléments 3a et 3b. Ces supports 7 sont dressés là où doivent venir se positionner la série d'éléments 1 devant être présents entre les éléments 3a et 3b, comme le sont les aubes 10 entre les segments ou secteurs 3a de couronne extérieure et 3b de couronne intérieure. L'outillage à supports 7 permet de maintenir les d'éléments 1 pendant les étapes **d**) et **e**). Lors de l'étape **d**), on va préparer l'assemblage que l'on va réaliser à l'étape **e**).

Aussi va-t-on à l'étape **d**) assurer que soit chauffée au moins une zone d'assemblage, telles que les zones 1a et/ou 1b figure 3, devant être située à l'interface entre lesdites deux ébauches vertes à assembler entre elles, de l'une au moins des deux ébauches vertes 1,3a et/ou 1,3b ; voir les zones 9a,9b figure 4.

Le chauffage qui, dans l'exemple retenu, est réalisé sur l'un seulement des éléments 1/3a,3b - à savoir la série d'éléments 1 -, est obtenu par des moyens de chauffage 11a,11b, qui peuvent être des résistances électriques, ou par exemple des jets de vapeur.

Chaque moyen de chauffage 11a,11b est disposé pour agir sur l'extrémité, ou la face d'extrémité 1a ou 1b de chaque élément 1 appartenant à l'interface ou zone d'assemblage précitée, 9a,9b, jusqu'à ce que du liant fondu soit présent à cet(ces) endroit(s) de l'une au moins des deux ébauches vertes 1,3a et/ou 1,3b ; voir figure 3.

Dans cet exemple de la figure 3, ce sont donc l'une et/ou l'autre des extrémités 1a et 1b qui présentent alors du liant fondu 13. On détaille mieux plus loin la manière dont ce liant fondu 13 peut être présent.

Quoi qu'il en soit, ceci fait, on va pouvoir :
e) assembler entre elles les deux ébauches vertes 1,3a et/ou 1,3b, par ladite au moins une zone d'assemblage 9a,9b, de façon à obtenir l'ébauche verte globale de ladite pièce, 5 ; voir figure 4, puis
**f**) éliminer une partie au moins du liant (qui peut être thermoplastique) de l'ébauche verte globale de la pièce, 5, de façon à obtenir une ébauche verte globale déliantée (autrement dit une ébauche brune selon la terminologie fréquemment utilisée), et
**g**) réaliser sur l'ébauche verte globale déliantée au moins un traitement de frittage.

Une fois l'outillage à supports 7 retiré (voir figure 5, après assemblage et refroidissement/solidification du liant fondu), on va donc obtenir une ébauche brune finale repérée 5-5a figure 5, qui pourra subir un ou plusieurs usinages finaux avant d'être prête à l'emploi, comme dans l'exemple de la figure 6.

Un ou plusieurs usinages intermédiaires auront pu avoir lieu après assemblage, mais avant déliantage.

Les paramètres de déliantage (température, atmosphère de confinement,...) dépendent, non seulement de la nature du liant, mais également de la nature de la poudre, métallique en l'espèce.

Les principales techniques de déliantage sont : la dégradation thermique, la dissolution dans un solvant, ou une combinaison des deux.

Sur l'ébauche déliantée, le traitement de frittage permettra de la densifier.

Une partie au moins du chauffage de la/des zone(s) d'interface où est présent du liant fondu pourra être assuré par apport d'une quantité additionnelle de liant, ce que schématise le repère 13a sur la figure 4 entre zones d'interface.

Dans ce cas, pour la qualité cristallographique, on pourra préférer :
- avant d'apporter ladite quantité additionnelle de liant, faire fondre cette quantité additionnelle de liant 13a,
- puis appliquer de la quantité additionnelle de liant fondu à l'endroit de ladite zone d'assemblage 9b,
- et ensuite réaliser l'assemblage de l'étape **e**).

A noter qu'une telle fusion préalable de liant 13a sera de préférence réalisée sur du liant en mélange avec du feedstock (matériau de base).

Dans l'exemple de la figure 4, on aurait pu prévoir deux séries de zones 13 ou deux séries de zones 13a, au lieu d'une de chaque, encore que les figures 3 et 4 permettent de noter qu'en zone 13a, l'extrémité 1b des éléments 1 a été chauffée (comme celle 1a) jusqu'à avoir rendue pâteuse cette zone de chaque élément 1 (figure 3), et l'on a parallèlement en outre apporté sur les deux éléments 1,3b ladite quantité additionnelle de liant 13a, à leur interface, donc en zone d'assemblage (figure 4).

Ainsi, dans ce cas, l'application de ladite quantité additionnelle de liant fondu 13a à l'endroit de la zone d'assemblage entre éléments a été assurée sur les deux (éléments d') ébauches vertes, 1,3b.

Avec un ou des bords ainsi fondu(s), l'assemblage de l'étape **e**) va pouvoir être réalisé en sécurité et de façon définitive :
- par application des deux ébauches vertes l'une contre l'autre à l'endroit de ladite zone d'assemblage 13 et/ou13a, puis,
- une pression des deux ébauches vertes l'une vers l'autre, comme le schématise les flèches 15 de la figure 4.

On notera que, lors de l'étape **d**), au moins ladite zone d'assemblage 9a et/ou 9b de l'une au moins des deux ébauches vertes à assembler entre elles a été, dans l'exemple :
- chauffée jusqu'à ce que du liant fondu entre 75°C et 85°C à +/- 5°C soit présent, et
- ce chauffage a duré entre 2s et 15s.

Une surépaisseur L (figure 3) comprise entre 0.5mm et 2mm (de préférence jusqu'à 1mm pour l'application secteur de redresseur ou secteur de distributeur) à l'interface aura pu être nécessaire pour que lors de l'assemblage, avec la pression appliquée (qui peut être entre 5MPa et 30MPa et de l'ordre de 10MPa à 20% près pour l'application précitée), le dimensionnel de la pièce finale 5-5a soit respecté et que la pièce ne soit pas écrasée.

Ainsi, la précision de l'assemblage est importante et joue sur le dimensionnel final. C'est une raison pour laquelle on a prévu l'outillage à supports 7, présent lors de l'assemblage avec pressage (étape **e** ; figure 4).

Lors de l'assemblage, on s'assurera quoi qu'il en soit qu'une pression suffisante soit appliquée afin que la zone d'interface 9 et/ou 9a ne soit pas une interface uniquement de liant plastique mais que ce liant soit mélangé avec la poudre métallique, à cet endroit. Concernant la surépaisseur L de matière précitée qui pourra être présente à l'endroit de ladite zone d'assemblage de l'une au moins des deux ébauches vertes, il est prévu qu'elle disparaisse au moins en partie à l'issue de l'étape **e**), en particulier du fait de la pression d'assemblage exercée.

En pratique, si elle existe, cette surépaisseur L de matière s'étendra dans la direction où la pression d'assemblage est exercée ; direction P figure 4.

Elle pourra en particulier consister en une sur-longueur ou sur-épaisseur, éventuellement juste locale, de l'un au moins des éléments 1,3a ou 3b considéré.

Le moulage MIM présenté ci-avant aurait pu être réalisé avec de la céramique, en remplacement de la poudre métallique. Pour un tel moulage CIM, la poudre utilisée pourrait, à titre d'exemple non limitatif, être l'un parmi un composé silico-alumineux, de l'alumine (Al2O3), de la Zircone (ZrO2), du nitrure de silicium, du carbure de silicium, seul ou en mélange.

## Revendications

1. Procédé de fabrication d'une pièce (50) d'aéronef ou de turbomachine pour aéronef, via un moulage par injection d'au moins un premier (1) et un second (3a,3b) éléments verts constitutifs de ladite pièce, ladite pièce à fabriquer (50) étant un secteur de redresseur de compresseur de turbomachine ou un secteur de distributeur de turbine de turbomachine, dans lequel procédé :
a) on prépare, pour chaque premier et second éléments, un mélange de poudre et d'un liant polymère liquide ou à l'état fondu, adapté pour permettre de lier les grains de poudre ensemble,
b) on injecte les mélanges préparés dans des moules adaptés respectivement à la forme du premier et du second éléments, de façon à obtenir deux ébauches vertes, respectivement des premier et second éléments,
c) une fois le liant devenu consistant, on extrait les deux ébauches vertes des moules respectifs,
d) au moins une zone d'assemblage (9a,9b) de l'une au moins des deux ébauches vertes, devant être située à l'interface (13,13a) entre lesdites deux ébauches vertes à assembler entre elles, est chauffée, de façon que du liant fondu soit présent à l'endroit de ladite zone d'assemblage,
e) on assemble entre elles les deux ébauches vertes par ladite au moins une zone d'assemblage, de façon à obtenir une ébauche verte globale de ladite pièce
f) on élimine une partie au moins du liant de l'ébauche verte globale, de façon à obtenir une ébauche verte globale déliantée, et
g) on réalise sur l'ébauche verte globale déliantée un traitement de frittage,
**caractérisé en ce que** lesdites deux ébauches vertes, respectivement des premier et second éléments, sont des ébauches vertes, respectivement :
- d'au moins une partie d'aube (10) de redressement dudit secteur de redresseur ou secteur de distributeur, et
- d'un secteur d'une couronne extérieure (30a) ou d'un secteur d'une couronne intérieure (30b) dudit secteur de redresseur ou secteur de distributeur, avec lequel une extrémité de ladite au moins une partie d'aube de redressement est à assembler à l'étape e).

2. Procédé selon la revendication 1 dans lequel, lors de l'étape d), ladite zone d'assemblage de l'une au moins des ébauches vertes à assembler entre elles est chauffée par apport d'une quantité additionnelle de liant à l'endroit de ladite zone d'assemblage (9a,9b).

3. Procédé selon la revendication 2, dans lequel l'apport de la quantité additionnelle de liant dans ladite zone d'assemblage (9a,9b) et l'assemblage de l'étape e) comprennent :
- avant d'apporter ladite quantité additionnelle de liant, de faire fondre la quantité additionnelle de liant,
- une application de ladite quantité additionnelle de liant fondu à l'endroit de ladite zone d'assemblage (9a,9b), puis
- l'assemblage de l'étape e).

4. Procédé selon la revendication 3, dans lequel l'application de ladite quantité additionnelle de liant fondu à l'endroit de ladite zone d'assemblage (9a,9b) comprend une application de ladite quantité additionnelle de liant fondu à l'endroit de ladite zone d'assemblage, sur les deux ébauches vertes.

5. Procédé selon la revendication 1 dans lequel, lors de l'étape d), ladite au moins une zone d'assemblage (9a,9b) de l'une au moins des deux ébauches vertes à assembler entre elles est chauffée par apport d'énergie calorifique à l'une au moins des deux ébauches vertes, à l'endroit de ladite zone d'assemblage (9a,9b), jusqu'à ce que dudit liant fondu y soit présent.

6. Procédé selon l'une quelconque des revendications précédentes, dans lequel l'assemblage de l'étape e) est réalisé :
- une application des deux ébauches vertes l'une contre l'autre à l'endroit de ladite zone d'assemblage (9a,9b), puis,
- une pression des deux ébauches vertes l'une vers l'autre.

7. Procédé selon l'une quelconque des revendications précédentes, dans lequel :
- lors de l'étape d), au moins ladite zone d'assemblage de l'une au moins des deux ébauches vertes à assembler entre elles est chauffée jusqu'à ce que du liant fondu entre 75°C et 85°C à +/- 5°C soit présent.

8. Procédé selon la revendication 7, dans lequel ladite au moins une zone d'assemblage de l'une au moins des deux ébauches vertes à assembler entre elles est chauffée entre 2s et 15s.

9. Procédé selon l'une quelconque des revendications précédentes, dans lequel à l'endroit de ladite zone d'assemblage (9a,9b) de l'une au moins des deux ébauches vertes, ladite ou chaque ébauche verte présente une surépaisseur (L) de matière qui disparaît au moins en partie à l'endroit de ladite interface, à l'issue de l'étape e).

10. Procédé selon les revendications 6 et 9 dans lequel la surépaisseur (L) de matière s'étend dans la direction où la pression d'assemblage est exercée.

11. Procédé selon la revendication 9 ou les revendications 9 et 10, dans lequel ladite surépaisseur (L) de matière est comprise entre 0.5mm et 2mm.

12. Procédé selon l'une quelconque des revendications précédentes, dans lequel le mélange de poudre et de liant polymère préparé lors de l'étape a) comprend de la poudre métallique.

## Patentansprüche

1. Verfahren zur Herstellung eines Bauteils (50) eines Luftfahrzeugs oder eines Turbotriebwerks für ein Luftfahrzeug durch Spritzgießen von zumindest einem ersten (1) und einem zweiten (3a, 3b) Grünteil, die das Bauteil bilden, wobei das herzustellende Bauteil (50) ein Leitapparatsektor eines Turbotriebwerk-Verdichters oder ein Leitschaufelsektor einer Turbotriebwerks-Turbine ist, wobei bei dem Verfahren
a) für jedes erste und zweite Teil eine Mischung aus Pulver und einem flüssigen oder im geschmolzenen Zustand vorliegenden polymeren Bindemittel bereitgestellt wird, die dazu geeignet ist, die Pulverkörnchen aneinander binden zu können,
b) die bereitgestellten Mischungen in Gießformen eingebracht werden, die jeweils an die Form des ersten bzw. des zweiten Teils angepasst sind, so dass zwei Grünlinge des ersten bzw. des zweiten Teils erhalten werden,
c) nachdem das Bindemittel konsistent geworden ist, die beiden Grünlinge aus den jeweiligen Gießformen entnommen werden,
d) zumindest ein Fügebereich (9a, 9b) von zumindest einem der beiden Grünlinge, der an der Grenzfläche (13, 13a) zwischen den beiden aneinanderzufügenden Grünlingen liegen soll, erhitzt wird, so dass geschmolzenes Bindemittel an der Stelle des Fügebereichs vorliegt,
e) die beiden Grünlinge durch den zumindest einen Fügebereich aneinandergefügt werden, so dass ein Gesamtgrünling des Bauteils erhalten wird,
f) zumindest ein Teil des Bindemittels aus dem Gesamtgrünling entfernt wird, um einen entbinderten Gesamtgrünling zu erhalten, und
g) an dem entbinderten Gesamtgrünling eine Sinterbehandlung erfolgt, **dadurch gekennzeichnet, dass**
die beiden Grünlinge des ersten bzw. des zweiten Teils jeweilige Grünlinge sind von
- zumindest einem Leitschaufelabschnitt (10) des Leitapparatsektors oder Leitschaufelsektors, und
- einem Sektor eines Außenrings (30a) oder einem Sektor eines Innenrings (30b) des Leitapparatsektors oder Leitschaufelsektors, mit dem ein Ende des zumindest einen Leitschaufelabschnitts in Schritt e) zusammengefügt werden soll.

2. Verfahren nach Anspruch 1,
wobei in Schritt d) der Fügebereich von zumindest einem der aneinanderzufügenden Grünlinge durch Zuführen einer zusätzlichen Menge an Bindemittel an die Stelle des Fügebereichs (9a, 9b) erhitzt wird.

3. Verfahren nach Anspruch 2,
wobei das Zuführen der zusätzlichen Menge an Bindemittel in den Fügebereich (9a, 9b) und das Aneinanderfügen gemäß Schritt e) Folgendes umfassen:
- vor dem Zuführen der zusätzlichen Menge an Bindemittel, Aufschmelzen der zusätzlichen Menge an Bindemittel,
- Aufbringen der zusätzlichen Menge an geschmolzenem Bindemittel an der Stelle des Fügebereichs (9a, 9b), dann
- Aneinanderfügen gemäß Schritt e).

4. Verfahren nach Anspruch 3,
wobei das Aufbringen der zusätzlichen Menge an geschmolzenem Bindemittel an der Stelle des Fügebereichs (9a, 9b) ein Aufbringen der zusätzlichen Menge an geschmolzenem Bindemittel an der Stelle des Fügebereichs auf die beiden Grünlinge umfasst.

5. Verfahren nach Anspruch 1,
wobei in Schritt d) der zumindest eine Fügebereich (9a, 9b) von zumindest einem der beiden aneinanderzufügenden Grünlingen durch Zuführen von Wärmeenergie zu zumindest einem der beiden Grünlinge an der Stelle des Fügebereichs (9a, 9b) erhitzt wird, bis das geschmolzene Bindemittel darin vorliegt.

6. Verfahren nach einem der vorhergehenden Ansprüche,
wobei bei dem Aneinanderfügen gemäß Schritt e) erfolgt:
- Aneinandersetzen der beiden Grünlinge an der Stelle des Fügebereichs (9a, 9b), dann
- Aneinanderdrücken der beiden Grünlinge.

7. Verfahren nach einem der vorhergehenden Ansprüche, wobei:
- in Schritt d) zumindest der Fügebereich von zumindest einem der beiden aneinanderzufügenden Grünlinge erhitzt wird, bis bei zwischen 75°C und 85°C, +/- 5°C, geschmolzenes Bindemittel vorliegt.

8. Verfahren nach Anspruch 7,
wobei der zumindest eine Fügebereich von zumindest einem der beiden aneinanderzufügenden Grünlinge zwischen 2 s und 15 s lang erhitzt wird.

9. Verfahren nach einem der vorhergehenden Ansprüche,
wobei an der Stelle des Fügebereichs (9a, 9b) von zumindest einem der beiden Grünlinge der oder jeder Grünling eine Materialüberdicke (L) aufweist, die an der Stelle der Grenzfläche nach Schritt e) zumindest teilweise wegfällt.

10. Verfahren nach Anspruch 6 und 9,
wobei sich die Materialüberdicke (L) in der Richtung erstreckt, in der der Fügedruck ausgeübt wird.

11. Verfahren nach Anspruch 9 oder den Ansprüchen 9 und 10,
wobei die Materialüberdicke (L) zwischen 0,5 mm und 2 mm beträgt.

12. Verfahren nach einem der vorhergehenden Ansprüche,
wobei die in Schritt a) bereitgestellte Mischung aus Pulver und polymerem Bindemittel Metallpulver enthält.

## Claims

1. A method for manufacturing an aircraft or turbomachine part (50) for an aircraft, by injection molding of at least a first (1) green element and a second (3a, 3b) green element of the said part, the said part to be manufactured (50) being a turbomachine compressor rectifier sector or a turbomachine turbine nozzle sector in which method:
a) a mixture of a powder and a polymeric binder, which is liquid or molten, is prepared for each of the first and second elements, adapted to enable the powder grains to be bonded together,
b) the prepared mixtures are injected into molds adapted to the shape of the first and second elements respectively, so as to obtain two green blanks of the first and second elements respectively,
c) once the binder has become consistent, the two green blanks are removed from the respective molds,
d) at least one assembly area (9a, 9b) of at least one of the two green blanks, which must be located at the interface (13, 13a) between the said two green blanks to be assembled together, is heated, so that molten binder is present at the location of the said assembly area,
e) the two green blanks are assembled together through the said at least one assembly area, so as to obtain an overall green blank of the said part,
f) at least part of the binder is removed from the overall green blank, so as to obtain a debonded overall green blank, and
g) a sintering treatment is carried out on the debonded overall green blank,
**characterised in that** the said two green blanks, respectively of the first element and the second element, are green blanks, respectively:
- of at least one part of the rectifying vane (10) of the said rectifier sector or nozzle sector, and
- of a sector of an outer ring (30a) or a sector of an inner ring (30b) of the said rectifier sector or nozzle sector, with which one end of the said at least one part of the rectifying vane is to be assembled in step e).

2. The method according to claim 1, in which, during step d), the said assembly area of at least one of the green blanks to be assembled together is heated by supplying an additional quantity of binder at the location of the said assembly area (9a, 9b).

3. The method according to claim 2, wherein supplying the additional amount of binder to the said assembly area (9a, 9b) and the assembling step of step e) comprises:
- before applying the said additional amount of binder, melting the additional amount of binder,
- applying the said additional amount of molten binder at the location of the said assembly area (9a,9b), and then
- carrying out the assembling step of step e).

4. The method according to claim 3, wherein applying the said additional amount of molten binder to the said assembly area (9a, 9b) comprises applying the said additional amount of molten binder to the said assembly area, on the two green blanks.

5. The method according to claim 1 wherein, during step d), the said at least one assembly area (9a, 9b) of at least one of the two green blanks to be assembled together is heated by supplying heat energy to at least one of the two green blanks, at the location of the said assembly area (9a, 9b), until the said molten binder is present therein.

6. The method according to any one of the preceding claims, wherein the assembling step of step e) is carried out:
- by pressing the two green blanks against each other at the location of the said assembly area (9a,9b), then,
- by pressing the two green blanks towards each other.

7. The method according to any one of the preceding claims, wherein:
- during step d), at least the said assembly area of at least one of the two green blanks to be assembled together is heated until molten binder between 75°C and 85°C at +/- 5°C is present.

8. The method according to claim 7, wherein the said at least one assembly area of at least one of the two green blanks to be assembled together is heated between 2s and 15s.

9. The method according to any one of the preceding claims, wherein at the location of the said assembly area (9a, 9b) of at least one of the two green blanks, the said or each green blank has an extra thickness (L) of material which disappears at least in part at the location of the said interface, at the end of step e).

10. The method according to claims 6 and 9 wherein the extra thickness (L) of material extends in the direction in which the assembly pressure is exerted.

11. The method according to claim 9 or claims 9 and 10, wherein the said extra thickness (L) of material is between 0.5mm and 2mm.

12. The method according to any one of the preceding claims, wherein the mixture of powder and polymeric binder prepared in step a) comprises metal powder.
